(19) **Europäisches Patentamt European Patent Office Office européen des brevets**

(11) **EP 4 687 331 A1**

(12) **EUROPEAN PATENT APPLICATION**

(43) Date of publication:
04.02.2026 Bulletin 2026/06

(21) Application number: 25174889.3

(22) Date of filing: 07.05.2025

(51) International Patent Classification (IPC):
*H04L 41/12* (2022.01)     *H04L 49/10* (2022.01)

(52) Cooperative Patent Classification (CPC):
**H04L 41/12; H04L 49/10;** G02B 6/4446

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.07.2024 US 202463677325 P 14.12.2024 US 202418981500**

(71) Applicant: **Intel Corporation Santa Clara, CA 95054 (US)**

(72) Inventors:
• **LAKHOTIA, Kartik San Jose, 95117 (US)**
• **PETRINI, Fabrizio Menlo Park, 94025 (US)**

(74) Representative: **Maiwald GmbH Engineering Elisenhof Elisenstrasse 3 80335 München (DE)**

Remarks:
Amended claims in accordance with Rule 137(2) EPC.

(54) **MULTI-FIBER CABLE CONNECTIVITY**

(57)     Examples described herein relate to a network configured according to a topology, where the network is to provide communication between the first computing device and the second computing device. In some examples, the network includes a combination of a connected shuffle box or a bipartite shuffle box. Various examples of connected shuffle boxes and bipartite shuffle boxes are described herein.

**FIG. 1**

# Description

## CLAIM OF PRIORITY

This application claims the benefit of priority to U.S. Provisional Application No. 63/677,325, filed July 30, 2024. The entire contents of that application are incorporated by reference.

## BACKGROUND

A network provides communications among devices, such as processors, accelerators, memory, and storage devices. Cables can be used to transmit packets among the devices. Cables contribute to the monetary cost of a network. The number of connected devices in a large-scale supercomputer or datacenter affects a network wiring topology. For example, a 32,000 node cluster with 64 network links per node (also called radix 64) has more than a million links in total. Physically connecting this high number of cables (e.g., fibers) is complex, labor-intensive, expensive, and prone to human error.

Multi-Fiber Cables (MFCs) can reduce cabling complexity by bundling together multiple fibers into a single cable. The number of fibers in an MFC is a width of the MFC. MFCs further provide a high-density form factor to connect optical fibers to a group of ports on a node with a small physical footprint. MFCs can increase the granularity at which connections can be established between the nodes or switches. In a large scale network, adjacent nodes or switches may have fewer or just a single link between them. Multiple nodes can connect to a shuffle box which can internally connect the nodes to each other at an individual fiber granularity.

## BRIEF DESCRIPTION OF THE DRAWINGS

FIG. 1 depicts an example network.
FIG. 2 depicts an example topology.
FIG. 3 depicts various examples of shuffle box connectivity.
FIG. 4 depicts an example all-to-all topology and example implementation of the all-to-all topology.
FIGs. 5A-5C depict example HyperX implementations.
FIG. 6 shows an example Dragonfly topology.
FIG. 7 shows an example of intra-group wiring for a Dragonfly network.
FIG. 8 shows an example of inter-group connectivity in the Dragonfly network.
FIG. 9 depicts intra-group and inter-group wiring.
FIG. 10 depicts an example process.
FIG. 11 depicts an example system.

## DETAILED DESCRIPTION

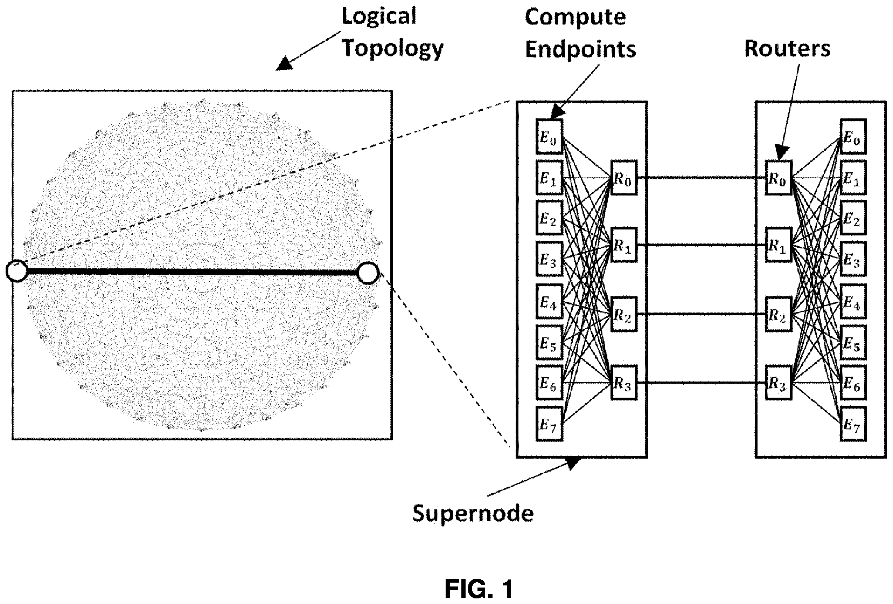

To increase a number of connected nodes, multi-rail networks deploy multiple independent replicas of a topology (also known as rails) for scalability and high bandwidth communications. A node or supernode in these networks includes multiple routers with endpoints that share their ports with the routers. Corresponding routers on each node are connected to create one independent instance of a logical topology. FIG. 1 shows a 4-rail network with a supernode that includes compute endpoints $E_0$ to $E_7$ (e.g., processors, memory, storage, or other devices) connected via routers, $R_0$ to $R_3$, to another supernode that includes compute endpoints $E_0$ to $E_7$. Each edge in the logical topology creates 4 physical links between the corresponding routers on the adjacent supernodes. Thus, the overall network consists of 4 replicas of the logical topology.

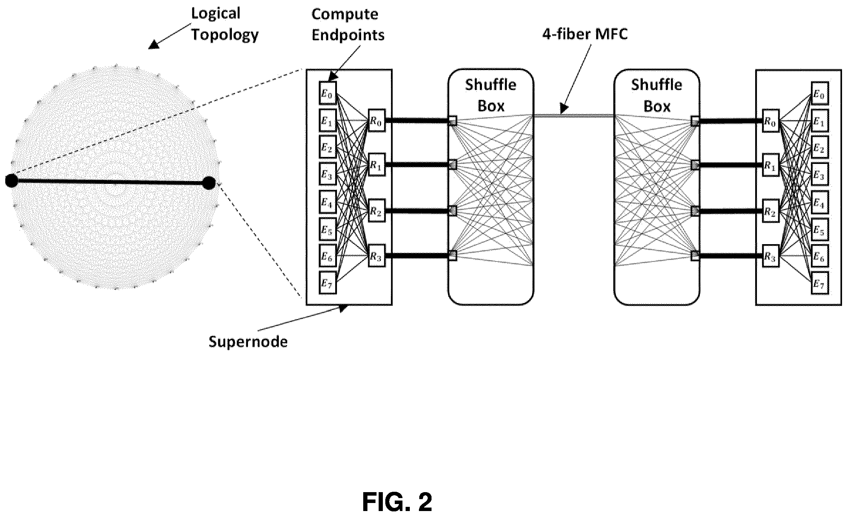

FIG. 2 depicts a 4-rail topology implemented using two-stage shuffle and 4-fiber MFCs. A shuffle box can be placed next to every supernode and all ports on all routers of a supernode can be linked to the shuffle box using MFCs. Internally, a shuffle box splits fibers from MFCs and groups together the individual fibers connected to the same port identifier (ID) on all routers of the supernode. A group of fibers connects to one supernode in the multi-rail network. A shuffle box can be connected to a shuffle box of an adjacent supernode using an MFC of width equal to the number of rails in the network (e.g., 4).

At each shuffle box, a signal (e.g., light or electricity) traverses interfaces from fiber to connector/adapter and vice-versa, which can introduce noise or affect signal amplitude. In a two-stage shuffle solution, there are two shuffle boxes in a path between adjacent supernodes, which increases signal loss. To maintain a desired error rate, when confronted with signal loss, laser power of a signal transmitter is increased, which increases the operating power of the network.

Various examples described herein can potentially reduce a number of shuffle boxes to implement a topology by utilizing a single stage shuffle box to wire fibers of a network in a path between adjacent nodes or routers. Instead of an aggregation of ports across the routers of a supernode, shuffle boxes with particular internal connectivity can be implemented based on a logical topology and associated nodes can be connected to the corresponding shuffle boxes. The topology information can be used to mine subgraphs that can be implemented as building blocks inside the shuffle boxes. Various examples can utilize one or more shuffle boxes and one or more MFCs can provide a graph as a building block to wire at least all-to-all, HyperX, Dragonfly, Megafly, PolarFly, SlimFly, Fat-Tree, PolarStar, or others.

Various examples can potentially enable the use of wider MFCs than two-stage shuffle because it is not dependent on multiple rails for grouping. Various examples can potentially reduce signal loss, thereby reducing power used to transmit or generate a transmitted signal.

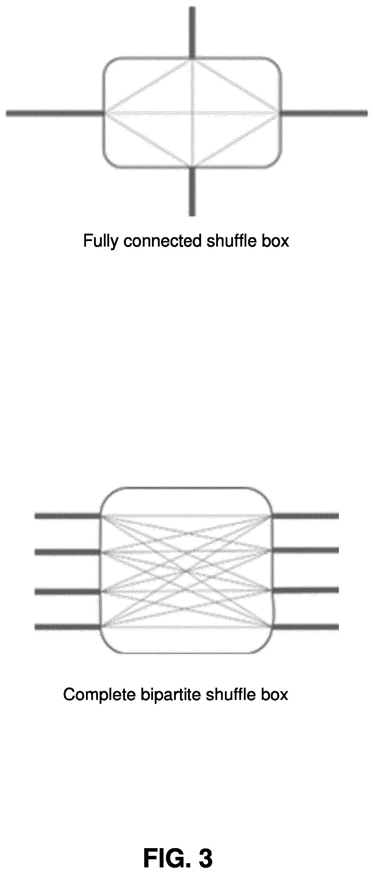

FIG. 3 depicts various examples of shuffle box connectivity. At least two types of shuffle boxes can be used to wire a network, namely, a connected shuffle box and bipartite shuffle box. A connected shuffle box $K_n$ can include n ports (or n + 1) with a n-fibers connected per port, amounting to total of $n^2$ (or $n^2$ +n) fibers per box. In some examples, an n-fiber MFC can connect to each port. The connected shuffle box connects n (or n + 1) ports with each other connected configuration so that every port has one fiber connected to every other port of the box.

A bipartite shuffle box $B_{2n}$ can include two groups of n ports each with an n-fiber MFC per port. The bipartite shuffle box can connect each port in one group to every port in another group using a single fiber per pair of ports.

As described herein, boxes can be split into multiple instances of smaller shuffle boxes or vice-versa based on manufacturing requirements and cost or other considerations. For example, to form a box, multiple shuffle boxes can be combined and connected. For example, a 2n fiber box with 2n ports and n - fibers per port (same size as $B_{2n}$ but different internal connectivity pattern) can be used to implement two $K_n$ shuffles in one box. A $K_{2n}$ box has 4 $n^2$ fibers and implements the same connectivity pattern as a combination of two $K_n$ boxes ($n^2$ fibers each) and one $B_{2n}$ box ($2n^2$ fibers).

Shuffle boxes can be split into multiple shuffle boxes. Due to manufacturing constraints or other reasons, if a $K_n$ ($n^2$ fibers) box cannot be manufactured, then the same connectivity can be established using, e.g., two $K_{\frac{n}{2}}$ shuffle boxes ($\frac{n^2}{4}$ fibers each) and one $B_n$ shuffle box ($\frac{n^2}{2}$ fibers). Similarly, connectivity of a $B_{2n}$ box ($2n^2$ fibers) can be replicated using four $B_n$ boxes ($\frac{n^2}{2}$ fibers each). As the cost of the shuffle boxes may grow with the width (e.g., number of fibers) of the box, splitting a shuffle box into multiple shuffle boxes may reduce the overall monetary cost of wiring and can potentially reduce the total fiber length used for wiring the network. Increasing shuffle box width and MFC width may increase bundling, reduce the number of cables and potentially reduce the footprint of the boxes.

In some networks, a fat link can represent multiple physical links assigned to a logical link in the topology. For instance, if a logical topology of node radix 32 is constructed from routers of radix 64, 2 physical links are wired between adjacent nodes to provide links with a fatness of 2. A single stage shuffle box can be used to wire topologies with fat links since shuffle box connectivity patterns are mined from the logical topology. The links and connectivity patterns inside the shuffle boxes can be scaled in accordance with the fatness of the logical link. If the scaled shuffle box is too large to manufacture, the shuffle box can be split into multiple shuffle boxes. Examples are described herein with a fatness of 1 for clarity of description, but other fatness levels can be used.

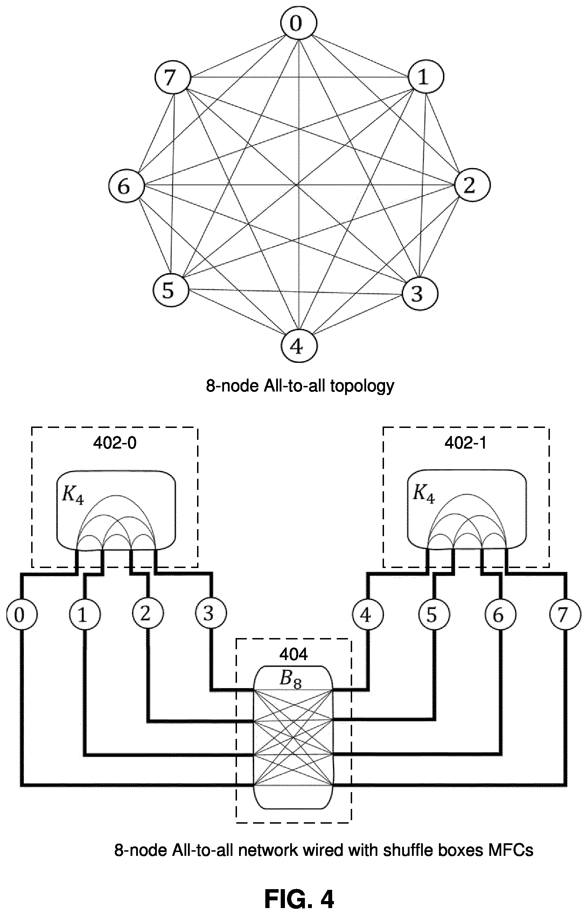

The all-to-all topology is a graph in that every node has a direct link to every other node in the network. However, scaling the all-to-all topology is limited by the number of links/ports per node. FIG. 4 depicts an example all-to-all topology and example implementation of the all-to-all topology. As described herein, an N=8 node all-to-all topology can be implemented with $K_4$ boxes 402-0 and 402-1 and $B_8$ box 404 with S = 2 node groups: {0,1,2,3} and {4,5,6,7}.

The all-to-all topology can be wired using MFCs and shuffle boxes of sizes smaller than the topology itself. For an N node all-to-all topology with N links per node, for any node, N - 1 ports can be connected to other nodes, and one port may remain unconnected or dangling.

The topology can be implemented using one or more connected shuffle box $K_n$ and bipartite shuffle box $B_{2n}$, where n is such that N is an integer multiple of n. Widths of MFCs can be customized to ensure that node radix is a multiple of n. For example, if N = 64 and n = 8, then shuffle boxes $K_n$ and $B_{2n}$ have 64 and 128 fibers, respectively, whereas the entire network will have 4096 fibers.

The N nodes can be split into $S = \frac{N}{n}$ groups of n nodes each. Every node is connected to other nodes in its group via a connected shuffle box $K_n$. Nodes across pair of groups are connected via a bipartite $B_{2n}$ box. Thus, S shuffle boxes of connected type $K_n$ and $\frac{S*(S-1)}{2}$ boxes of bipartite $B_{2n}$ can be used. The wirings can use n-fiber MFCs to connect nodes to shuffle boxes. If N cannot be a multiple of n, then shuffle box sizes and MFC widths can be overprovisioned to leave some ports on the shuffle boxes and some fibers on certain MFCs unconnected. In subsequent examples, relevant network size and radix parameters are multiple of MFC width n.

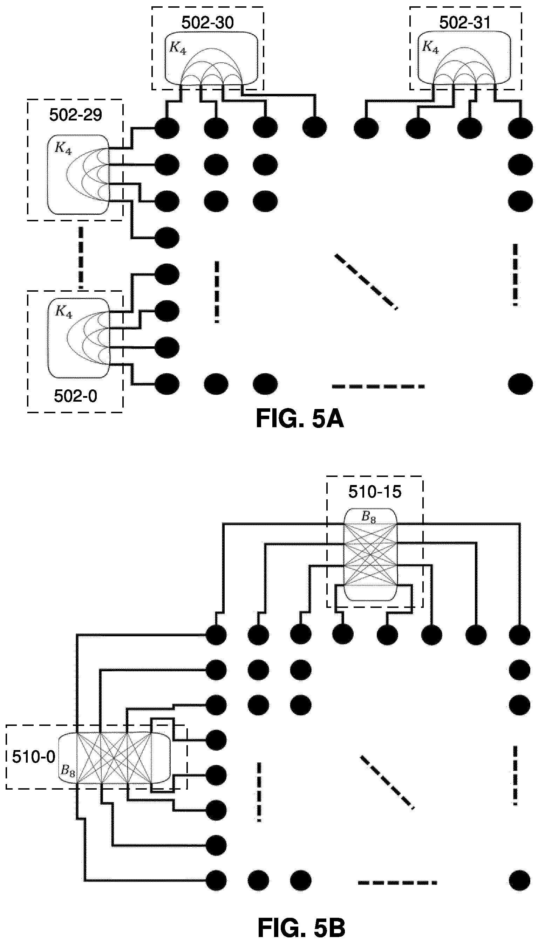

The HyperX topology is a multi-dimensional grid with all-to-all connectivity in each dimension. FIG. 5A depicts a 2-dimensional 8 × 8 HyperX implemented using connected $K_4$ shuffle boxes 502-0 to 502-3. FIG. 5B depicts a 2-dimensional 8 × 8 HyperX implemented using bipartite $B_8$ shuffle boxes 510-0 and 510-1. For every node, the ports connecting the node in any given dimension are contiguous or physically co-located and hence, can be connected using MFCs and multi-fiber adapters exclusive for that dimension. FIGs. 5A and 5B display the use of these boxes in one row and one column and display $K_n$ and $B_{2n}$ boxes separately for clarity. Note that if $K_8$ boxes can be used, each row and column of the 8 × 8 HyperX can be wired with one shuffle box.

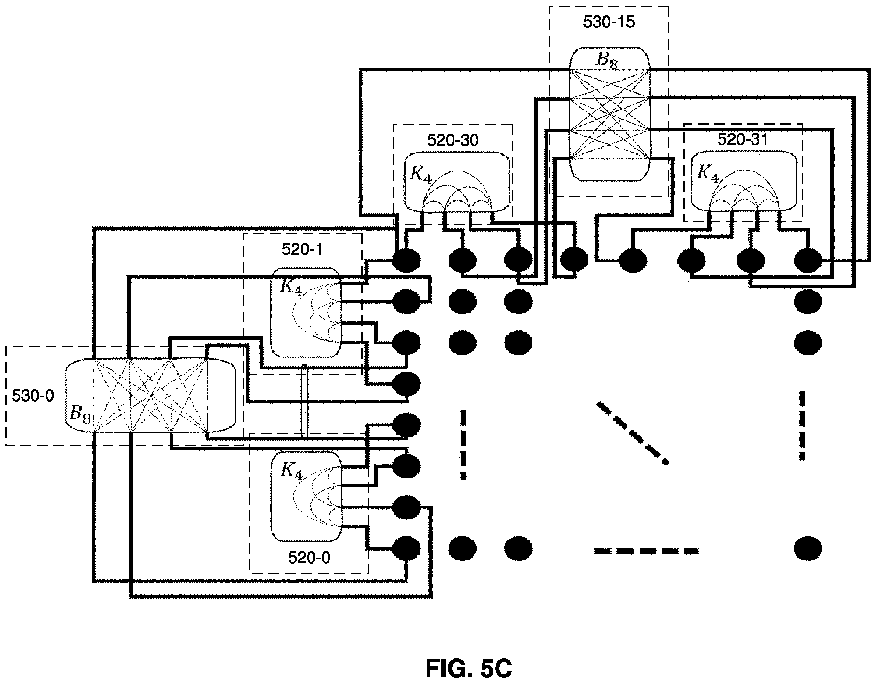

FIG. 5C depicts an example an 8x8 HyperX topology using connected $K_4$ boxes and bipartite $B_8$

boxes. This system can include 32 $K_4$ shuffle boxes 520-0 to 520-31 and 16 $B_8$ shuffle boxes 530-0 to 530-15. For a D-dimensional HyperX with dimension sizes $D_1, D_2 ... D_D$ and n-fiber MFCs, assuming the dimension sizes $D_i$ are a multiple of n, wiring this network can include: (1) a number of $K_n$

$$\text{boxes} = D * \frac{\Pi_{i=1}^{P} D_i}{n}$$

and (2) a number of

$$\text{boxes} = \frac{(\Pi_{i=1}^{P} D_i)}{2n} * \sum_{i=1}^{D} \left( \frac{D_i}{n} - 1 \right)$$

$B_{2n}$

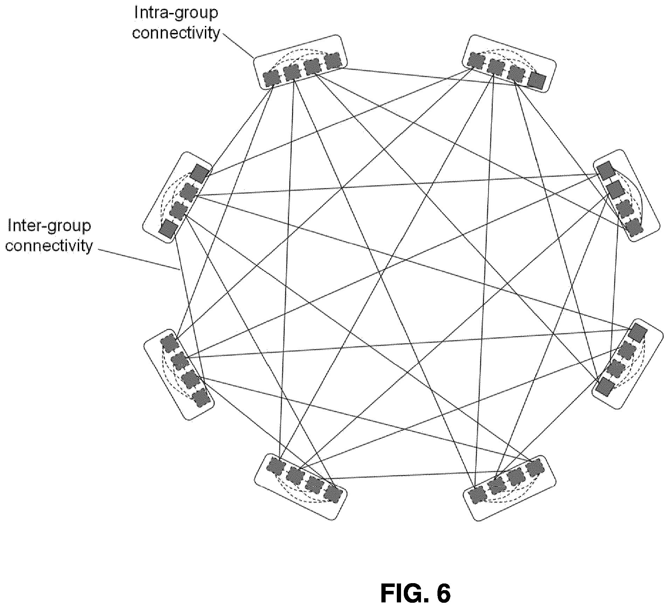

Dragonfly is a hierarchical topology of multiple groups of nodes where each group of nodes includes an equal number of nodes and within a group, the nodes can be connected in an all-to-all fashion and some ports on a node can be dedicated to intra-group connectivity and some ports can be dedicated to inter-node connectivity. In addition, inter-group ports of nodes in a group can be combined and connect the group to all other groups. For the Dragonfly topology, there is an all-to-all connectivity between the groups as well. FIG. 6 shows an example Dragonfly topology with 8 groups and 4 nodes per group. Nodes of a group can be connected by intra-group links whereas groups can be connected by inter-group links. Within a group, the nodes induce an all-to-all topology by the wiring as shown.

Where ports for intra-group connections and inter-group connections on a node are contiguous or physically co-located, ports can be connected using MFCs and multi-fiber adapters exclusively for either intra-group or inter-group connectivity. If the nodes and ports used for inter-group connectivity are uniform across the groups, the node ID and port ID linked to any given group can be the same for all the groups. For example, node ID 0 and port ID 0 can be connected to group 0 for all the groups.

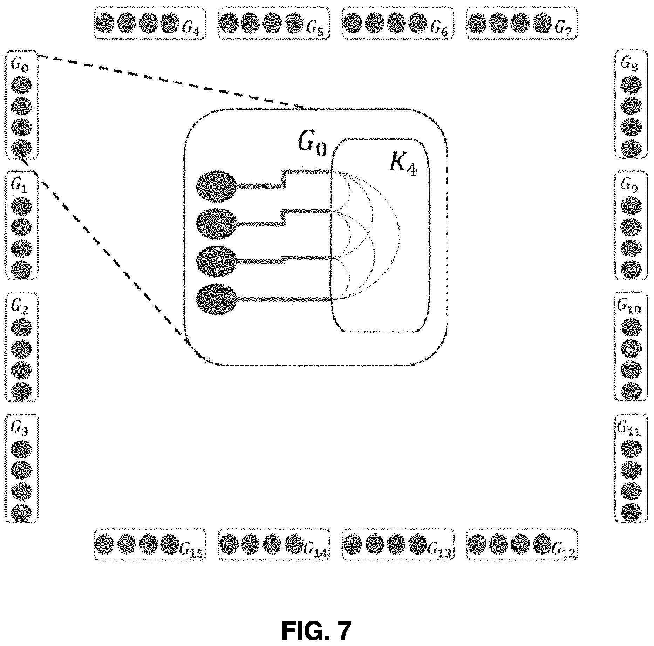

FIG. 7 shows an example of intra-group wiring for a Dragonfly network. For example, 16 groups and 4 nodes per group can be implemented using 4-fiber MFCs and connected $K_4$ shuffle boxes. An intra-group single stage shuffle wiring for a 16-group Dragonfly can utilize connected $K_4$ shuffle boxes. For clarity, wiring is shown only for one group and other groups can follow a same wiring scheme. Large-scale dragonfly networks may have a very large number of groups and inter-group fibers. For example, a Dragonfly topology with 32 inter-group ports per node and 32 nodes per group can have 1024 groups and more than 1 million fibers running across the groups. However, wiring these many fibers with one shuffle box may not be feasible.

To implement inter-group wiring, an entire group can be a big node with radix as large as the number of groups in the topology. Identifiers (IDs) can be assigned to the groups following the uniform inter-group connectivity. For example, the group connected to node 0 in a group and first inter-group port of node 0 can be assigned ID $G_0$, the group connected to node i in the group and $j^{th}$ inter-group port of node i can be assigned ID $G_{i*j}$. Since the groups are all-to-all connected, the entire inter-group network can be visualized as a large all-to-all network.

The groups can be divided into disjoint subsets of n-groups that are internally connected using connected $K_n$ shuffle boxes and connected to other subsets using bipartite $B_{2n}$ shuffle boxes. For each shuffle box linked to the group, the appropriate node(s) corresponding to the group's ports can be identified and connected to the shuffle box using MFCs.

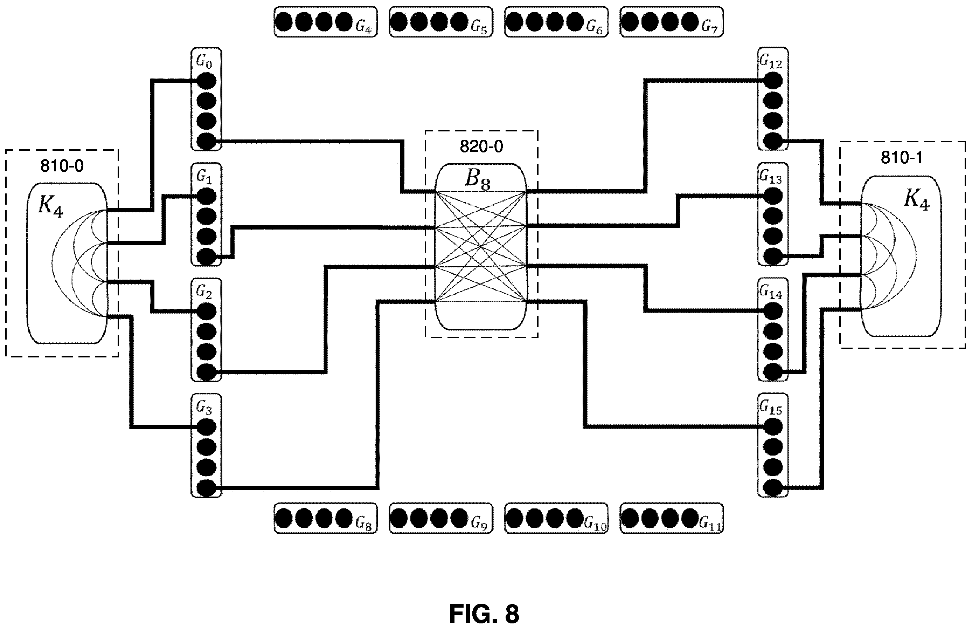

FIG. 8 shows an example of inter-group connectivity in the Dragonfly network with 16 groups and 4 nodes per group. For clarity, connectivity for only for two subsets of groups is shown, $\{G_0, G_1, G_2, G_3\}$ and $\{G_{12}, G_{13}, G_{14}, G_{15}\}$. In the group subset $\{G_0, G_1, G_2, G_3\}$, the topmost nodes have MFCs to the connected $K_4$ shuffle boxes 810-0 and 810-1 connecting nodes within this group, and the bottommost nodes have MFCs to the bipartite $B_8$ shuffle box 820-0 connecting to groups $\{G_{12}, G_{13}, G_{14}, G_{15}\}$.

A Dragonfly with $N_1$ intra-group ports and $N_2$ inter-group ports per node can include $N_1$ nodes per group and $N_1 N_2$ groups. Wiring such a network with n-fiber MFCs can utilize: (1) $\frac{N_1 N_2 (N_1 + 1)}{n}$ number of connected $K_n$ shuffle boxes and (2) $\frac{(N_1 N_2)}{2n} * \left( \frac{N_1 (N_1 + N_2)}{n} - (N_1 + 1) \right)$ number of bipartite $B_{2n}$ shuffle boxes.

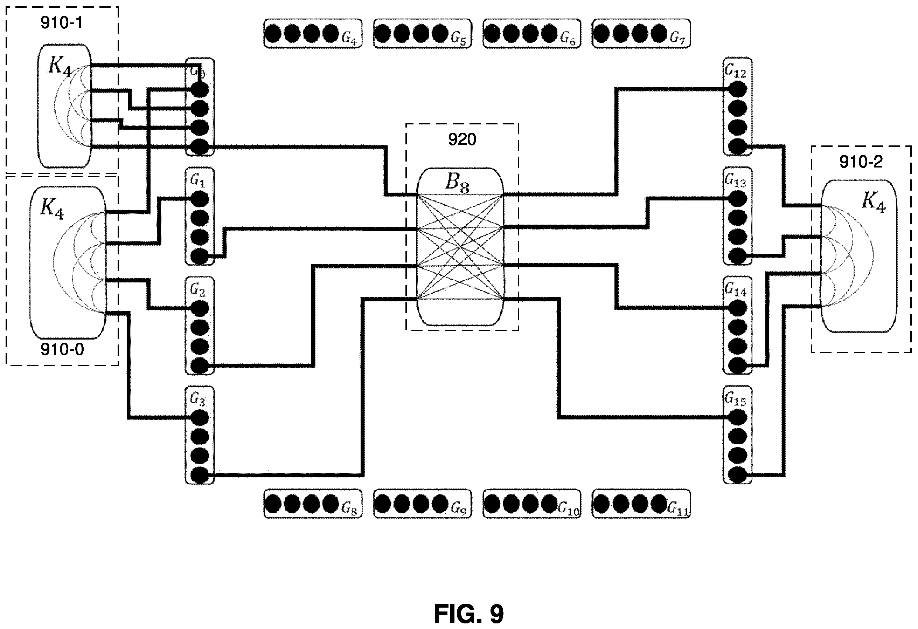

FIG. 9 depicts intra-group and inter-group wiring. For example, connected $K_4$ shuffle boxes can be used in a 16-group Dragonfly. A connected $K_4$ shuffle box can provide connectivity within group $G_0$. In Dragonfly, shuffle boxes can be used across three different hierarchies. First, shuffle box(es) establish intra-group connectivity. Each group is connected internally and intra-group wiring in each group can be implemented in the same way as all-to-all topology. Second, for connected shuffle boxes $K_n$ 910-0 to 910-2 and bipartite $B_{2n}$, 920 subset of 'n' groups are created. The groups in these subsets have contiguous IDs. For instance, the subsets with $K_4$ and $B_8$ can be {G0, G1, G2, G3}, {G4, G5, G6, G7}, {G8, G9, G10, G11} ... {G12, G13, G14, G15}. A $K_n$ shuffle box can establish inter-group connectivity within each subset.

For example, $B_{2n}$ shuffle box 920 can provide inter-group wiring across the subsets. A $B_{2n}$ box 920 can provide connectivity for a pair of subsets and a number $B_{2n}$ boxes is based on the number of subset pairs. For a given pair of subsets, the groups in each subset connect to either side of the $B_{2n}$ box. The bipartite graph inside $B_{2n}$ box 920 can ensure that each group in one subset is connected to every group in the other subset.

A single-stage shuffle solution may increase the overall fiber length used in the wiring because even two switches that are placed physically proximate to one another are not directly connected and can be connected by a shuffle boxed placed physically far from the switches. While bundling the fibers using MFCs more than offsets the cost, shuffle boxes can be placed to reduce fiber length and resulting costs. Consider a set of N nodes connected to a shuffle box that are located at points $\{p_1, p_2 ... p_N\}$ in a 3D Euclidean space. Let $d(p,q)$ denote the Euclidean distance between any two points p and q and find a point h to place the shuffle box which minimizes $\sum_{i=1}^{N} d(p_i, h)$. The shuffle box can be placed at the geometric median of the nodes connected to it to minimize the total fiber length. Geometric median of a set of points minimizes the sum of the Euclidean distances to the set of points (node coordinates in our case), and can be found using off-the-shelf methods such as Weiszfeld's algorithm.

Shuffle boxes can be placed in a way that reduces the longest fiber length between any two adjacent nodes. The longest distance between a pair of nodes in the network determines the maximum latency and buffer size requirements of the network routers. This problem can be formalized as that of finding a point h such that

$$h = \arg\min_{q} \max_{i,j=1}^{N} \left( d(p_i, h) + d(p_j, h) \right)$$

, and can be solved using iterative or linear optimization methods.

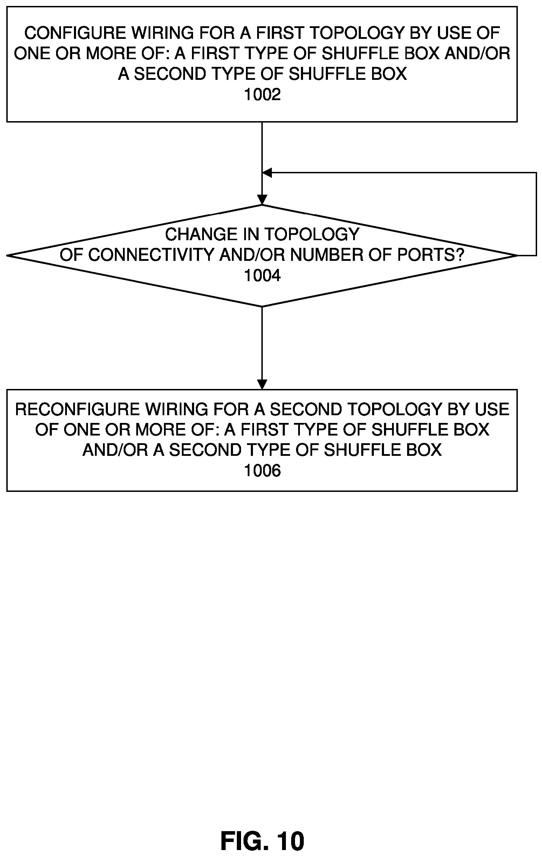

FIG. 10 depicts an example process that can be used to create various topologies using one or more types of shuffle boxes. The process can be performed by a machine in some examples. At 1002, forming wiring for a topology with multi-fiber cables by connection of one or more of: at least one connected shuffle box or at least one bipartite shuffle box. In some examples, the topology comprises all-to-all, HyperX, or Dragonfly. The connected shuffle box can include a connector with n ports with n-fibers connected per port so that n ports are connected with each other in a connected configuration so that every port has one fiber connected to every other port of the box. The bipartite shuffle box comprises a connector with two groups of n ports each with an n-fiber Multi-Fiber Cable (MFC) per port that connects every port in one group to every port in another group with a single fiber.

At 1004, a determination can be made as whether a topology of wiring has changed from a first topology to a second topology or a number of ports to be connected has changed. Based on no change in topology of wiring or number of connected ports and no change in number of ports to be connected, the process can repeat 1004. Based on a change in topology of wiring or number of ports to be connected, the process can proceed to 1006.

At 1006, the wiring for the topology can be adapted for the second topology and/or number of ports to wire ports of the second topology by connection of one or more connected shuffle boxes and/or one or more bipartite shuffle boxes.

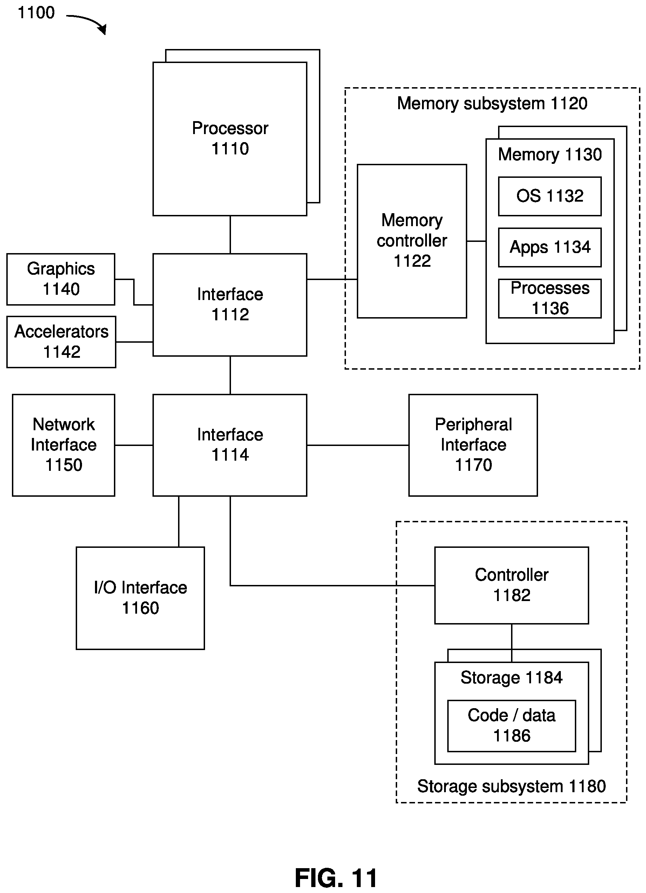

FIG. 11 depicts a system. In some examples, components of system 1100 can be connected using wiring of ports as described herein. For example, interface 1112 and/or 1114 can be wired by connection of one or more connected shuffle boxes and/or one or more bipartite shuffle boxes. System 1100 includes processor 1110, which provides processing, operation management, and execution of instructions for system 1100. Processor 1110 can include any type of microprocessor, central processing unit (CPU), graphics processing unit (GPU), XPU, processing core, or other processing hardware to provide processing for system 1100, or a combination of processors. An XPU can include one or more of: a CPU, a graphics processing unit (GPU), general purpose GPU (GPGPU), and/or other processing units (e.g., accelerators or programmable or fixed function FPGAs). Processor 1110 controls the overall operation of system 1100, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 1100 includes interface 1112 coupled to processor 1110, which can represent a higher speed interface or a high throughput interface for system components that needs higher bandwidth connections, such as memory subsystem 1120 or graphics interface components 1140, or accelerators 1142. Interface 1112 represents an interface circuit, which can be a standalone component or integrated onto a processor die. Where present, graphics interface 1140 interfaces to graphics components for providing a visual display to a user of system 1100. In one example, graphics interface 1140 can drive a display that provides an output to a user. In one example, the display can include a touchscreen display. In one example, graphics interface 1140 generates a display based on data stored in memory 1130 or based on operations executed by processor 1110 or both. In one example, graphics interface 1140 generates a display based on data stored in memory 1130 or based on operations executed by processor 1110 or both.

Accelerators 1142 can be a programmable or fixed function offload engine that can be accessed or used by a processor 1110. For example, an accelerator among accelerators 1142 can provide data compression (DC) capability, cryptography services such as public key encryption (PKE), cipher, hash/authentication capabilities, decryption, or other capabilities or services. In some cases, accelerators 1142 can be integrated into a CPU socket (e.g., a connector to a motherboard or circuit board that includes a CPU and provides an electrical interface with the CPU). For example, accelerators 1142 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 1142 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations.

Memory subsystem 1120 represents the main memory of system 1100 and provides storage for code to be executed by processor 1110, or data values to be used in executing a routine. Memory subsystem 1120 can include one or more memory devices 1130 such as read-only memory (ROM), flash memory, one or more varieties of random access memory (RAM) such as DRAM, or other memory devices, or a combination of such devices. Memory 1130 stores and hosts, among other things, operating system (OS) 1132 to provide a software platform for execution of instructions in system 1100. Additionally, applications 1134 can execute on the software platform of OS 1132 from memory 1130. Applications 1134 represent programs that have their own operational logic to perform execution of one or more functions. Processes 1136 represent agents or routines that provide auxiliary functions to OS 1132 or one or more applications 1134 or a combination. OS 1132, applications 1134, and processes 1136 provide software logic to provide functions for system 1100. In one example, memory subsystem 1120 includes memory controller 1122, which is a memory controller to generate and issue commands to memory 1130. It will be understood that memory controller 1122 could be a physical part of processor 1110 or a physical part of interface 1112. For example, memory controller 1122 can be an integrated memory controller, integrated onto a circuit with processor 1110.

Applications 1134 and/or processes 1136 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

In some examples, OS 1132 can be Linux®, Windows® Server or personal computer, FreeBSD®, Android®, MacOS®, iOS®, VMware vSphere, openSUSE, RHEL, CentOS, Debian, Ubuntu, or any other operating system. The OS and driver can execute on a processor sold or designed by Intel®, ARM®, AMD®, Qualcomm®, IBM®, Nvidia®, Broadcom®, Texas Instruments®, among others.

While not specifically illustrated, it will be understood that system 1100 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 1100 includes interface 1114, which can be coupled to interface 1112. In one example, interface 1114 represents an interface circuit, which can include standalone components and integrated circuitry. In one example, multiple user interface components or peripheral components, or both, couple to interface 1114. Network interface 1150 provides system 1100 the ability to communicate with remote devices (e.g., servers or other computing devices) over one or more networks. Network interface 1150 can include an Ethernet adapter, wireless interconnection components, cellular network interconnection components, USB (universal serial bus), or other wired or wireless standards-based or proprietary interfaces. Network interface 1150 can transmit data to a device that is in the same data center or rack or a remote device, which can include sending data stored in memory. Network interface 1150 can receive data from a remote device, which can include storing received data into memory. In some examples, packet processing device or network interface device 1150 can refer to one or more of: a network interface controller (NIC), a remote direct memory access (RDMA)-enabled NIC, SmartNIC, router, switch, forwarding element, infrastructure processing unit (IPU), or data processing unit (DPU).

In one example, system 1100 includes one or more input/output (I/O) interface(s) 1160. I/O interface 1160 can include one or more interface components through which a user interacts with system 1100. Peripheral interface 1170 can include any hardware interface not specifically mentioned above. Peripherals refer generally to devices that connect dependently to system 1100.

In one example, system 1100 includes storage subsystem 1180 to store data in a nonvolatile manner. In one example, in certain system implementations, at least certain components of storage 1180 can overlap with components of memory subsystem 1120. Storage subsystem 1180 includes storage device(s) 1184, which can be or include any conventional medium for storing large amounts of data in a nonvolatile manner, such as one or more magnetic, solid state, or optical based disks, or a combination. Storage 1184 holds code or instructions and data 1186 in a persistent state (e.g., the value is retained despite interruption of power to system 1100). Storage 1184 can be generically considered to be a "memory," although memory 1130 is typically the executing or operating memory to provide instructions to processor 1110. Whereas storage 1184 is nonvolatile, memory 1130 can include volatile memory (e.g., the value or state of the data is indeterminate if power is interrupted to system 1100). In one example, storage subsystem 1180 includes controller 1182 to interface with storage 1184. In one example controller 1182 is a physical part of interface 1114 or processor 1110 or can include circuits or logic in both processor 1110 and interface 1114.

A volatile memory is memory whose state (and therefore the data stored in it) is indeterminate if power is interrupted to the device. A non-volatile memory (NVM) device is a memory whose state is determinate even if power is interrupted to the device.

In an example, system 1100 can be implemented using interconnected compute sleds of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe (e.g., a non-volatile memory express (NVMe) device can operate in a manner consistent with the Non-Volatile Memory Express (NVMe) Specification, revision 1.3c, published on May 24, 2018 ("NVMe specification") or derivatives or variations thereof).

Communications between devices can take place using a network that provides die-to-die communications; chip-to-chip communications; circuit board-to-circuit board communications; and/or package-to-package communications. Die-to-die communications can utilize Embedded Multi-Die Interconnect Bridge (EMIB) or an interposer. Components of examples described herein can be enclosed in one or more semiconductor packages. A semiconductor package can include metal, plastic, glass, and/or ceramic casing that encompass and provide communications within or among one or more semiconductor devices or integrated circuits. Various examples can be implemented in a die, in a package, or between multiple packages, in a server, or among multiple servers. A die can include semiconductor devices that include one or more processing devices or other circuitry. A tile can include semiconductor devices that include one or more processing devices or other circuitry. For example, a physical package can include one or more dies, plastic or ceramic housing for the dies, and conductive contacts conductively coupled to a circuit board. A system in package (SiP) can include a package that encloses one or more of: a system on chip (SoC), one or more tiles, or other circuitry.

In an example, system 1100 can be implemented using interconnected compute platforms of processors, memories, storages, network interfaces, and other components. High speed interconnects can be used such as PCIe, Ethernet, or optical interconnects (or a combination thereof).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission, or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z."'

Illustrative examples of the devices, systems, and methods disclosed herein are provided below. An embodiment of the devices, systems, and methods may include any one or more, and any combination of, the examples described below.

Example 1 includes one or more examples, and includes a method comprising: wiring multi-fiber cables (MFCs) for a topology by port connected fibers coupling at least one connected shuffle box and zero or more bipartite shuffle boxes.

Example 2 includes one or more examples, wherein the topology comprises all-to-all.

Example 3 includes one or more examples, wherein the topology comprises HyperX.

Example 4 includes one or more examples, wherein the topology comprises Dragonfly.

Example 5 includes one or more examples, wherein the at least one connected shuffle box comprises a connector with a number n ports with n-fibers connected per port so that n ports are connected with each other in a connected configuration so that a port has one fiber connected to other ports of the at least one connected shuffle box.

Example 6 includes one or more examples, wherein a bipartite shuffle box comprises a connector with two groups of n ports each with an n-fiber MFC per port that connects a port in one group to ports in another group with a single fiber.

Example 7 includes one or more examples, and includes a single shuffle box connecting a pair of adjacent nodes.

Example 8 includes one or more examples, wherein: a quantity of connected shuffle boxes is based on manufacturing constraints on box size, cost, yield, time to manufacture, or form factor constraints and a quantity of bipartite shuffle boxes is based on manufacturing constraints on box size, cost, yield, time to manufacture, or form factor constraints.

Example 9 includes one or more examples, and includes an apparatus that includes: a network configured according to a topology comprising: at least one connected shuffle box, at least one bipartite shuffle box, and multi-fiber cables coupling the at least one connected shuffle box to the at least one bipartite shuffle box, wherein the multi-fiber cables are connected to the at least one connected shuffle box and the at least one bipartite shuffle box.

Example 10 includes one or more examples, wherein the topology comprises all-to-all.

Example 11 includes one or more examples, wherein the topology comprises HyperX.

Example 12 includes one or more examples, wherein the topology comprises Dragonfly.

Example 13 includes one or more examples, wherein the at least one connected shuffle box comprises a connector with a number n ports with n-fibers connected per port so that n ports are connected with each other in a connected configuration so that a port has one fiber connected to other ports of the at least one connected shuffle box.

Example 14 includes one or more examples, wherein the at least one bipartite shuffle box comprises a connector with two groups of n ports each with an n-fiber MFC per port that connects a port in one group to ports in another group with a single fiber.

Example 15 includes one or more examples, and includes a single shuffle box to couple a pair of adjacent nodes.

Example 16 includes one or more examples, and includes a system comprising: a first computing device; a second computing device; and a network configured according to a topology, wherein the network is to provide communication between the first computing device and the second computing device, the network comprising: at least one connected shuffle box, at least one bipartite shuffle box, and multi-fiber cables coupling the at least one connected shuffle box to the at least one bipartite shuffle box, wherein the multi-fiber cables are connected to the at least one connected shuffle box and the at least one bipartite shuffle box.

Example 17 includes one or more examples, wherein: the first computing device comprises one or more of: a processor, a memory, a storage device, or an accelerator and the second computing device comprises one or more of: a processor, a memory, a storage device, or an accelerator.

Example 18 includes one or more examples, wherein the topology includes: all-to-all, HyperX, Dragonfly, Megafly, PolarFly, SlimFly, Fat-Tree, or PolarStar.

Example 19 includes one or more examples, wherein the at least one connected shuffle box comprises a connector with a number n ports with n-fibers connected per port so that n ports are connected with each other in a connected configuration so that a port has one fiber connected to other ports of the at least one connected shuffle box.

Example 20 includes one or more examples, wherein the at least one bipartite shuffle box comprises a connector with two groups of n ports each with an n-fiber MFC per port that connects a port in one group to ports in another group with a single fiber.

**Claims**

1.  A method comprising:
    wiring multi-fiber cables (MFCs) for a topology by port connected fibers coupling at least one connected shuffle box and zero or more bipartite shuffle boxes.

2. The method of claim 1, wherein the topology comprises all-to-all, HyperX, or Dragonfly.

3. The method of claim 1, wherein a bipartite shuffle box comprises a connector with two groups of n ports each with an n-fiber MFC per port that connects a port in one group to ports in another group with a single fiber.

4. The method of claim 1, comprising a single shuffle box connecting a pair of adjacent nodes.

5. The method of claim 1, wherein:

   a quantity of connected shuffle boxes is based on manufacturing constraints on box size, cost, yield, time to manufacture, or form factor constraints and
   a quantity of bipartite shuffle boxes is based on manufacturing constraints on box size, cost, yield, time to manufacture, or form factor constraints.

6. The method of any of claims 1-5, wherein the at least one connected shuffle box comprises a connector with a number n ports with n-fibers connected per port so that n ports are connected with each other in a connected configuration so that a port has one fiber connected to other ports of the at least one connected shuffle box.

7. An apparatus comprising:
   a network configured according to a topology comprising:

   at least one connected shuffle box,
   at least one bipartite shuffle box, and
   multi-fiber cables coupling the at least one connected shuffle box to the at least one bipartite shuffle box, wherein the multi-fiber cables are connected to the at least one connected shuffle box and the at least one bipartite shuffle box.

8. The apparatus of claim 7, wherein the topology comprises all-to-all, HyperX, or Dragonfly.

9. The apparatus of claim 7, wherein the at least one connected shuffle box comprises a connector with a number n ports with n-fibers connected per port so that n ports are connected with each other in a connected configuration so that a port has one fiber connected to other ports of the at least one connected shuffle box.

10. The apparatus of claim 7, comprising a single shuffle box to couple a pair of adjacent nodes.

11. The apparatus of any of claims 7-10, wherein the at least one bipartite shuffle box comprises a connector with two groups of n ports each with an n-fiber MFC per port that connects a port in one group to ports in another group with a single fiber.

12. A system comprising:

    a first computing device;
    a second computing device; and
    a network configured according to a topology, wherein the network is to provide communication between the first computing device and the second computing device, the network comprising:

    at least one connected shuffle box,
    at least one bipartite shuffle box, and
    multi-fiber cables coupling the at least one connected shuffle box to the at least one bipartite shuffle box, wherein the multi-fiber cables are connected to the at least one connected shuffle box and the at least one bipartite shuffle box.

13. The system of claim 12, wherein the at least one connected shuffle box comprises a connector with a number n ports with n-fibers connected per port so that n ports are connected with each other in a connected configuration so that a port has one fiber connected to other ports of the at least one connected shuffle box.

14. The system of claim 12, wherein the at least one bipartite shuffle box comprises a connector with two groups of n ports each with an n-fiber MFC per port that connects a port in one group to ports in another group with a single fiber.

15. The system of any of claims 12-14, wherein:

    the first computing device comprises one or more of: a processor, a memory, a storage device, or an accelerator and
    the second computing device comprises one or more of: a processor, a memory, a storage device, or an accelerator.

**Amended claims in accordance with Rule 137(2) EPC.**

1. A method comprising:
   wiring, by human or machine, multi-fiber cables, MFCs, for implementing a network topology by port-connected fibers coupling to at least one shuffle box of at least one of two types of shuffle boxes, referred to herein as connected shuffle box and bipartite shuffle box, wherein the at least one connected shuffle box and the at least one bipartite shuffle box have different internal connectivity patterns.

2. The method of claim 1, wherein the network topology comprises all-to-all, HyperX, or Dragonfly.

3. The method of claim 1, wherein a bipartite shuffle box comprises a connector with two groups of n ports each, with an n-fiber MFC per port that connects a port in one group to ports in another group with a single fiber per pair of ports.

4. The method of claim 1, comprising a single shuffle box connecting a pair of adjacent nodes of the network.

5. The method of claim 1, wherein:

    a quantity of connected shuffle boxes is based on manufacturing constraints on box size, cost, yield, time to manufacture, or form factor constraints and
    a quantity of bipartite shuffle boxes is based on manufacturing constraints on box size, cost, yield, time to manufacture, or form factor constraints.

6. The method of any of claims 1-5, wherein the at least one connected shuffle box comprises a connector with a number $n$ of ports, with n-fibers connected per port so that the $n$ ports are connected with each other in a connected configuration, wherein any given such port has one respective fiber connected per port to other ports of the at least one connected shuffle box.

7. The method of any one of claims 1-5, wherein such connectivity pattern is mined from a graph or subgraph that corresponds to the network topology.

8. A system comprising:
a network having a topology, comprising:

    at least one connected shuffle box,
    at least one bipartite shuffle box, and
    multi-fiber cables coupling the at least one connected shuffle box to the at least one bipartite shuffle box, wherein the multi-fiber cables are connected to the at least one connected shuffle box and the at least one bipartite shuffle box, wherein the at least one connected shuffle box and the at least one bipartite shuffle box have different internal connectivity patterns.

9. The system of claim 7, wherein the topology comprises all-to-all, HyperX, or Dragonfly.

10. The system of claim 7, wherein the at least one connected shuffle box comprises a connector with a number of $n$ ports, with n-fibers connected per port so that the $n$ ports are connected with each other in a connected configuration, wherein any given such port has one respective fiber connected per port to other ports of the at least one connected shuffle box.

11. The system of claim 7, comprising a single shuffle box to couple a pair of adjacent nodes of the network.

12. The system of any of claims 7-10, wherein the at least one bipartite shuffle box comprises a connector with two groups of $n$ ports each with an n-fiber MFC per port that connects a port in one group to ports in another group with a single fiber per pair of ports.

13. The system of any one of claims 7-11, further comprising:

    a first computing device;
    a second computing device; and
    wherein the network to provide communication between the first computing device and the second computing device.

14. The system of claim 12, wherein:

    the first computing device comprises one or more of: a processor, a memory, a storage device, or an accelerator and
    the second computing device comprises one or more of: a processor, a memory, a storage device, or an accelerator.

15. Use of at least one shuffle box, having a connectivity pattern, selected from at least two types of shuffle boxes in implementing a network topology, wherein such connectivity patterns for the at least two types of shuffle boxes are different.

**FIG. 1**

EP 4 687 331 A1

**FIG. 2**

Compute Endpoints

Shuffle Box

Shuffle Box

4-fiber MFC

Supernode

Logical Topology

$E_0$ $E_1$ $E_2$ $E_3$ $E_4$ $E_5$ $E_6$ $E_7$

$R_0$ $R_1$ $R_2$ $R_3$

Fully connected shuffle box

Complete bipartite shuffle box

# FIG. 3

8-node All-to-all topology

8-node All-to-all network wired with shuffle boxes MFCs

# FIG. 4

**FIG. 5A**

**FIG. 5B**

FIG. 5C

FIG. 6

FIG. 7

FIG. 8

**FIG. 9**

CONFIGURE WIRING FOR A FIRST TOPOLOGY BY USE OF ONE OR MORE OF: A FIRST TYPE OF SHUFFLE BOX AND/OR A SECOND TYPE OF SHUFFLE BOX
1002

CHANGE IN TOPOLOGY OF CONNECTIVITY AND/OR NUMBER OF PORTS?
1004

RECONFIGURE WIRING FOR A SECOND TOPOLOGY BY USE OF ONE OR MORE OF: A FIRST TYPE OF SHUFFLE BOX AND/OR A SECOND TYPE OF SHUFFLE BOX
1006

FIG. 10

1100

Processor
1110

Memory subsystem 1120

Memory controller
1122

Memory 1130

OS 1132

Apps 1134

Processes
1136

Graphics
1140

Accelerators
1142

Interface
1112

Network
Interface
1150

Interface
1114

Peripheral
Interface
1170

I/O Interface
1160

Controller
1182

Storage 1184

Code / data
1186

Storage subsystem 1180

FIG. 11

**EP 4 687 331 A1**

# EUROPEAN SEARCH REPORT

Europäisches Patentamt
European Patent Office
Office européen des brevets

**Application Number**

EP 25 17 4889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 363 208 B1 (JUDGE ALAN M [IE] ET AL) 7 June 2016 (2016-06-07) * column 1, line 5 - column 17, line 61; figures 1-10 * | 1-15 | INV. H04L41/12 H04L49/10 |
| X | US 2014/270762 A1 (LI RUODING [US] ET AL) 18 September 2014 (2014-09-18) * paragraph [0002] - paragraph [0129]; figures 1-19 * | 1-3,7,8, 11,12, 14,15 | |
| X | US 10 088 643 B1 (ALLEN-WARE MALCOLM S [US] ET AL) 2 October 2018 (2018-10-02) * column 1, line 5 - column 18, line 24; figures 1-10 * | 1,5,7, 12,15 | |
| X | US 2024/022327 A1 (WILLIAMS MATTHEW ROBERT [CA] ET AL) 18 January 2024 (2024-01-18) * paragraph [0001] - paragraph [0167]; figures 1-49B * | 1,2,7,8, 12,15 | |
| | | | **TECHNICAL FIELDS SEARCHED (IPC)** H04L G02B |

The present search report has been drawn up for all claims

| Place of search | Date of completion of the search | Examiner |
|---|---|---|
| Munich | 7 October 2025 | Lupia, Sergio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

## ANNEX TO THE EUROPEAN SEARCH REPORT
## ON EUROPEAN PATENT APPLICATION NO.

EP 25 17 4889

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2025

| Patent document cited in search report | | Publication date | Patent family member(s) | | Publication date |
|---|---|---|---|---|---|
| US 9363208 | B1 | 07-06-2016 | US | 9363208 B1 | 07-06-2016 |
| | | | US | 2016277320 A1 | 22-09-2016 |
| | | | US | 2018131634 A1 | 10-05-2018 |
| US 2014270762 | A1 | 18-09-2014 | US | 2014270762 A1 | 18-09-2014 |
| | | | WO | 2014143822 A1 | 18-09-2014 |
| US 10088643 | B1 | 02-10-2018 | NONE | | |
| US 2024022327 | A1 | 18-01-2024 | CA | 3197217 A1 | 12-05-2022 |
| | | | EP | 4241397 A1 | 13-09-2023 |
| | | | US | 2024022327 A1 | 18-01-2024 |
| | | | WO | 2022096927 A1 | 12-05-2022 |

EPO FORM P0459

For more details about this annex : see Official Journal of the European Patent Office, No. 12/82

## REFERENCES CITED IN THE DESCRIPTION

### Patent documents cited in the description

- US 63677325